# EUROPEAN PATENT APPLICATION

(11) **EP 3 961 118 A1**
(43) Date of publication of application: **02.03.2022**
(21) Application number: 21194010.1
(22) Date of filing: 31.08.2021
(51) Int. Cl.: F24F 11/30, F24D 19/10

(54) **APPARATUS, METHOD AND COMPUTER PROGRAM PRODUCT FOR CONTROLLING CONDITIONS IN BUILDING**

(30) Priority: 01.09.2020 FI 20205850
(71) Applicant: MoistMaster Oy, 33610 Tampere (FI)
(72) Inventor: Vinha, Juha, 33610 Tampere (FI)
(74) Representative: Papula Oy

(57) **Abstract**

An apparatus, method, and computer program product for preventing microbial growth in a building (B). The apparatus (A) is configured to sense indoor temperature (T_{IN}) and is provided with sensing data on outdoor temperature (T_{OUT}) and outdoor relative humidity (RH_{OUT}) outside the building envelope (BE) . The apparatus comprises a control unit (CU) by means of which at least one heating device (HD) is controlled for heating the building in response to the received sensing data. Outdoor conditions (C_{OUT}) are monitored in response to the received outdoor temperature and relative humidity. Thereby outdoor instants favourable for microbial growth are detected. The heating of the building is controlled in response to the detected outdoor conditions for preventing microbial growth inside a structure of the building envelope (BE) .

## Description

### Background of the invention

The invention relates to an apparatus configured to control conditions in a building so that microbial growth is prevented.

The invention further relates to a method and computer program product for controlling conditions in a building.

The field of the invention is defined more specifically in the preambles of the independent claims.

Unsuitable combinations of temperature and relative humidity are risks for microbial growth. Microbial growth may influence reliability and lifespan of a structure of a building. Risks for microbial growth are increased in buildings, which are used only temporarily, or heating and ventilation are not set to the level for a typical use. Some arrangements have been designed for the incompletely heated buildings. In typical solutions indoor temperature is set to a constant level below a typical operating level. However, these solutions have shown to be inadequate to protect the envelope structures of the buildings in all cases, and further, their energy consumption is often too high.

### Brief description of the invention

An object of the invention is to provide a novel and improved apparatus, method and computer program for controlling conditions inside an envelope structure of an incompletely heated building.

The apparatus according to the invention is characterized by the characterizing features of the first independent apparatus claim.

The method according to the invention is characterized by the characterizing features of the independent method claim.

The computer program product according to the invention is characterized by the characterizing features of the second independent apparatus claim.

An idea of the disclosed solution is that an apparatus is provided for controlling conditions of an incompletely heated building which comprises an indoor space limited by a building envelope. The apparatus comprises one or more indoor temperature sensors for sensing indoor temperature in the indoor space. The apparatus is also provided with data on outdoor temperature outside the building envelope and data on outdoor relative humidity outside the building envelope. The apparatus further comprises one or more control units provided with processors and computer programs executable in the processors. The control unit receives sensing or measuring data from the mentioned sensors and generates control commands for one or more heating devices for heating the building. The apparatus monitors outdoor conditions in response to the received outdoor temperature and relative humidity data and detects outdoor instants favourable for microbial growth. Further, the apparatus controls the heating device in response to the detected outdoor conditions for preventing microbial growth inside a structure of the envelope of the building.

In other words, favourable outdoor conditions for microbial growth are taken into account when controlling the heating. Further, the monitoring includes a time factor, i.e. how long the favourable outdoor conditions for moisture damages last and how often such situations occur. Thereby, the apparatus can detect when and how much is the indoor heating needed to protect the envelope structure against the microbial growth.

An advantage of the disclosed solution is that conditions of inner structures of a building envelope can be monitored and risks for microbial growth can be eliminated or decreased. Thereby extensive and expensive repair can be avoided, and health problems caused by the microbes can be avoided.

A further advantage of the disclosed solution is that the apparatus is inexpensive and easy to mount and use. There is no need to make any modifications to the building and its systems and installations.

Since the disclosed control system is based on the indoor and outdoor mounted sensors or measuring devices, there is no need to mount sensors and other instrumentation inside a structure of the building envelope.

The same apparatus may control one or more compartments of the same building and may implement the same or somewhat different control principles and parameters in different compartments. Structures and building materials of the compartments may be different wherefore the control may also differ. Further, two or more separate buildings may have one common apparatus for implementing the disclosed heating control. In other words, the apparatus is capable of managing several different buildings and several compartments of the same building.

In this document the building envelope includes roof, external wall, and floor structures.

In this document the microbial growth or microbe growth includes growth of bacteria and mould as well as growth of other microbes. In other words, moulds and bacteria are microbes which may damage structures of the buildings and may cause health problems.

According to an embodiment, the indoor temperature is sensed for sensing the current state in the indoor space. This data is needed as a feedback data for the control unit.

According to an embodiment, the apparatus is designed for buildings with at least partly insulated envelope structure. There may occur critical points for microbial growth inside the insulated envelope structure.

According to an embodiment, the apparatus may alternatively be designed for buildings which comprise a multi-layered envelope structure. The multi-layered envelope structures may comprise critical points inside them.

According to an embodiment, the apparatus is designed for fully or partly non-heated buildings intended only for occasional or temporary residency. In such buildings which are incompletely heated, a greater risk for microbial growth occurs compared to buildings having stable and relatively high inner temperature. The building is a summerhouse, summer cottage, holiday home, hut, barrack, warehouse, shed or corresponding building intended for occasional or temporary residency or non-residency.

According to an embodiment, the apparatus is provided with one or more outdoor temperature sensors for sensing outdoor temperature outside the building envelope. There are also one or more outdoor humidity sensors for sensing outdoor relative humidity outside the building envelope. In this embodiment the apparatus can be independently operable.

According to an embodiment, the apparatus is configured to receive the outdoor sensing data on outdoor temperature and outdoor relative humidity from and external device via a data communication connection. The data communication connection may be wired or wireless. Further, the apparatus may receive the data via a connection to the Internet.

According to an embodiment, the apparatus is provided with a measuring cycle or procedure for executing series of measurements of the outdoor temperature and relative humidity. The control unit is configured to accumulate the received outdoor sensing data for a determined period whereby the control unit is configured to generate accumulated data on the outdoor conditions. Further, the control unit is configured to take into account the accumulated data of the outdoor conditions when controlling the indoor heating. In other words, the control unit provides the indoor heating control with delays so that the heating control does not directly follow the currently sensed outdoor conditions but instead operates with lower rate of change. This way, delays in conditions of the envelope structures can be taken into account. The envelope structure may store heat and moisture, and further, the structure may delay release of the stored heat and moisture.

In other words, the apparatus may be considered to detect and record number of instances and their magnitudes when the favourable situations for microbial growth occur and can compensate the accumulated data when unfavourable conditions for the microbial growth exist. This way, the system may serve as a kind of counter for the favourable conditions. Then fluctuation of the recorded favourable and unfavourable sensing data can cause delays to the control of the heating. Due to the delays in both control directions, the overall heating control can be stable and can still follow the changing outdoor conditions. For example, sensing several successive and substantial unfavourable instances may reset the counter.

According to an embodiment, the apparatus is provided with at least memory device for storing the accumulated sensing data.

According to an embodiment, the apparatus allows conditions inside the envelope structure to meet conditions favourable for microbial growth for a limited period. In other words, relatively short visits at the microbial growth range are not considered harmful since the conditions needs to be at the microbial growth range for a certain time until actual microbial growth occurs.

According to an embodiment, the apparatus is configured to take into account accumulated data of an adjustable time period. The accumulated data can be considered back to one week period, for example.

According to an embodiment, the apparatus is configured to shorten the time period for the considered accumulated data when the outdoor conditions change rapidly. Then, the stored sensing data can be analyzed by the monitoring program and taken into account only the most recent sensed values. In that way it is possible to detect trends in conditions and to shorten response delay of the indoor heating control. It is also possible to implement machine learning techniques to the monitoring program for that purpose.

According to an embodiment, the produced outdoor sensing data is input to the control unit and frequency of input rate is adjustable.

According to an embodiment, the apparatus is configured to monitor rate of change in outdoor conditions and is configured to automatically adjust frequency of the input rate in response to the detected rate of change. In other words, when the apparatus notifies that outdoor conditions, i.e. outdoor temperature and humidity, change rapidly, the apparatus can then increase the frequency of input rate.

According to an embodiment, the apparatus is configured to execute filtering measures for the produced outdoor sensing data, and the apparatus is configured to take into account filtered sensing data in the control.

According to an embodiment, at least one outdoor temperature sensor and at least one outdoor humidity sensor are provided with a filtering feature for filtering the sensed data before transmitting the data to the control unit. This way sampling rates of the sensors may be high and only the filtered data is input to the control unit for further consideration.

According to an embodiment, the apparatus is configured to execute sampling action with several sensing values and is configured to calculate average value for the produced sensing values, wherein the calculated average value per predetermined number of sensing data or sensing period, i.e. floating average value is taken into consideration in the control.

For example, the outdoor temperature and relative humidity conditions may change rapidly. Then measuring sensing rate may be high, once per two minutes, and the control unit may be provided with an average of the sensed values at predetermined intervals, like once per every hour. This way short-term incidents do not cause undesired fluctuations to the heating control.

According to an embodiment, the apparatus is provided with input data on critical outdoor relative humidity values RH_{CriticalOut} defined for conditions being favourable for microbial growth at different outdoor temperatures. Then the apparatus may detect instants when the sensed outdoor relative humidity values exceed the critical outdoor relative humidity values at a certain outdoor temperature and the control unit controls the heating of the indoor space in response to the detected instants.

According to an embodiment, the mentioned critical outdoor relative humidity values are defined for conditions being favourable for mould growth or bacteria growth.

According to an embodiment, the mentioned critical outdoor relative humidity value changes in function of outdoor temperature.

According to an embodiment, the mentioned critical outdoor relative humidity values are based on a Microbial Growth Model MGM designed to determine critical relative humidity values at different temperatures where mould and bacteria growth occurs. There are several different microbial and mould growth models based on scientific research and defining temperature and relative humidity values where microbial growth occurs.

According to an embodiment, the mentioned critical outdoor relative humidity values are based on a Finnish Mould Growth Model FMGM based on scientific research on mould growth on the surfaces of building materials. This model takes into account also time, i.e., how long favourable conditions for mould growth may last without causing problems to the envelope structures and cause indoor health problems.

According to an embodiment, the apparatus is configured to take into account in the heating control structural features of the building envelope.

According to an embodiment, the structural values may be indicative of the following features of the building envelope: thermal insulation level; used materials and their sensitivity to mould growth; airtightness.

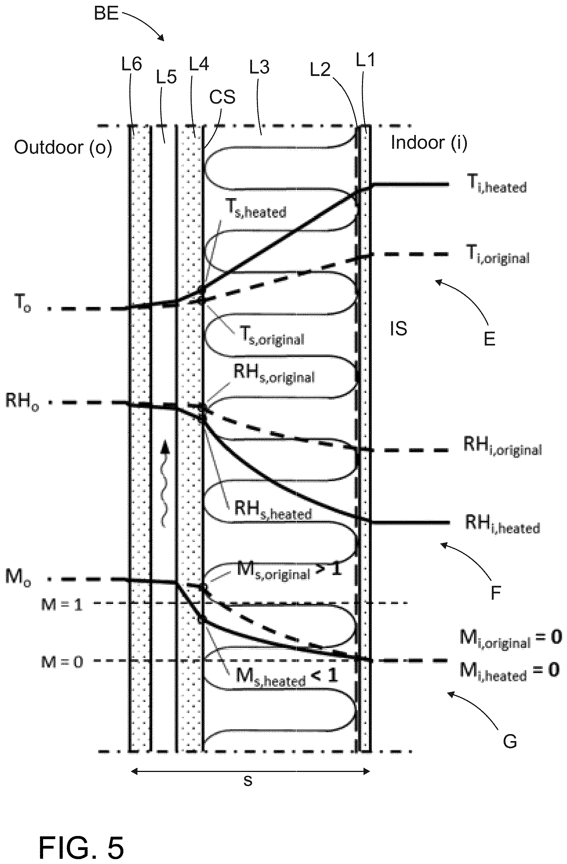

According to an embodiment, especially thermal resistance and other building physical properties of a sheathing may also be important issues to be taken into consideration as structural values as well as a type of an external wall cladding and its capability to protect the wall structure from wetting caused by rains (see Fig. 5).

According to an embodiment, the apparatus is provided with selectable heating control levels for controlling the indoor heating. The heating control level may be selected in accordance with the mentioned structural features of the building envelope. The apparatus may be provided for example with three heating control levels having dedicated principles and or parameters to different structures having different sensitivity to moisture damages. When the heating control level is set at higher level, then indoor temperature is increased with higher rate and to higher level. Then temperature inside the structure increases and relative humidity decreases, as it is shown in Figure 5, whereby occurrence of favourable conditions for moisture condensation and microbial growth decreases.

According to an embodiment, the apparatus is provided with an algorithm or formula wherein different parameters of the envelope are considered.

According to an embodiment, the control unit is configured to control the heating device to heat the indoor space only when the outdoor temperature is over 0°C or close to it since almost no microbial growth exists when the temperature is below 0°C.

In other words, the control unit is configured to allow the indoor temperature to follow the outdoor temperature when the sensed outdoor temperature is below a level where microbial growth no longer exists. Thus, the indoor temperature may be allowed to fall during cold winter days so low that conditions indoor and inside structure of the envelope are safe regarding the microbial growth. Once the outdoor temperature rises to temperatures where microbial growth is again possible, the control unit monitors the outdoor relative humidity and activates selectively the heating.

According to an embodiment, the apparatus is configured also to detect conditions when the outdoor temperature (T_{OUT}) is below 0°C and outdoor relative humidity (RH_{OUT}) fluctuates between 90 - 100 % RH, or approaches 100 % RH. Further, the apparatus is configured to control the heating in order to mitigate moisture condensation inside envelope structures. Purpose of this control principle is to prevent structural damages of the building envelope due to the condensated moisture.

According to an embodiment, the disclosed solution relates to a method of preventing microbial growth inside a building envelope. The method comprises: sensing indoor and outdoor temperatures and outdoor relative humidity outside the building envelope. Sensing data is transmitted to at least one control unit, which controls one or more heating devices for heating the building in response to the received sensing data. The method further comprises monitoring outdoor conditions in response to the received outdoor temperature and relative humidity and detecting outdoor instants favourable for microbial growth. The heating of the building is controlled in response to the detected outdoor conditions in order to prevent microbial growth inside the envelope structures of the building.

According to an embodiment, the disclosed solution relates to a computer program product. The computer program product comprises program code means configured to execute the steps and procedures disclosed in this document when being run on a computer or a data processing device.

According to an embodiment, the apparatus and its control unit may communicate with one or more external devices such as computers, smart phones via Internet connection or telecommunication systems, for example. Then it is possible to modify and communicate to the apparatus control status on/off, control parameters, and control set points. In other words, the apparatus may comprise remote control and update features.

According to an embodiment the heating device controlled by means of the disclosed apparatus is an electrical heating device. Alternatively, gas heating, oil heating, pellet heating or any other suitable heating is utilized. However, controlling the electrical heating is simple and accurate. The mentioned other heating systems require control devices for controlling their operation under command of the disclosed apparatus and its control unit.

According to an embodiment the heating device controlled by means of the disclosed apparatus is a device separate from envelope structures of the building. Then the heating device is arranged inside the indoor space and may be a stand-alone heating device or it may be mounted to inner surfaces of the indoor space. Alternatively, the heating device may be integrated to the building structure and may be a floor heating device or ceiling heating device.

According to an embodiment, the control unit is provided with an abnormal control mode wherein energy consumption is temporarily prioritized over the above disclosed normal control intended for preventing inner conditions of the envelope to meet critical conditions regarding microbial growth. However, duration of such anomaly control situation is relatively short so that microbial growth is not initiated even though the sensed relative humidity becomes favourable for it. An advantage of this embodiment is that the apparatus may take into consideration peak hours of energy consumption and hours when energy prize is at its highest, whereby avoiding effective use of at least one heating device during these certain time instances may provide considerable savings. As it is disclosed above, the indoor heating and changing outdoor conditions both affect to the inner structure of the envelope with a delay, whereby it is safe to postpone the indoor heating somewhat in order to save energy costs. The disclosed apparatus may store data on the determined need for the indoor heating and may automatically control the heating device on when energy with lower prizes is available. Thus, the apparatus may monitor the energy prizes and the cumulated need for the indoor heating and may be configured to automatically execute the required heating with reasonable energy costs.

According to an embodiment, the apparatus may be provided with data on hourly energy tariffs for at least next 24 hours and the control unit is configured to activate the operation of the at least one heating device for the duration of lower tariffs and is configured to avoid their use when high tariffs occur. In other words, the heating is smartly activated only at moments when the energy price is low. Thus, the control unit monitors hourly energy prices and avoids drying of the inner air during peak prices. The control unit may also predict the needed energy consumption and may activate the heating in advance so that the heating is executed during the low price hours and is terminated for the duration of the high price hours.

According to an embodiment, the control unit is provided with local weather forecast data and is configured to take into account the data when estimating oncoming rapid changes in the outdoor conditions.

According to an embodiment, when a building has a crawl space, another outdoor sensor that measures temperature (T_{OCS}) and relative humidity (RH_{OCS}) can be installed there. This sensor has its own control algorithm, which differs from the usual one related to outdoor conditions. This is because in crawl spaces, conditions are usually even more critical for mould growth and moisture condensation than in outdoor air. This is especially the case in older buildings, where the ground floor lacks a capillary break layer and thermal insulation, whereby moisture flows from the ground into the crawl space as a result of diffusion and capillary flow. In addition, the most critical conditions occur in the crawl space typically at different times than in the outdoor air. In the outdoor air, the most critical period for mould growth is typically in the autumn, but in crawl space it is often in the spring and summer. In this case, adding heating inside during the autumn does not protect the crawl space in the best way. When the indoor air is heated in this case, the control program checks the need for heating in relation to the indoor air conditions, the crawl space conditions and the other envelope structures conditions and selects the need for heating according to which of them requires the greatest heating. The solution described in this embodiment can be implemented in some cases also by utilizing only sensing data received from the crawl space, i.e., using temperature (T_{OCS}) and relative humidity (RH_{OCS}) values. Otherwise, the control principles are as is disclosed in this document.

The above disclosed embodiments may be combined in order to form suitable solutions having those of the above features that are needed.

### Brief description of the figures

Some embodiments are described in more detail in the accompanying drawings, in which
Figure 1 is a schematic view of a building provided with an apparatus for controlling indoor heating,
Figure 2 is a schematic diagram of detrimental phenomenon caused by high level of relative humidity to an inner structure of a building,
Figure 3 is a schematic diagram of critical factors for different types of microbial growth,
Figure 4 is a schematic graph illustrating control principles implemented by means of the disclosed apparatus,
Figure 5 is a schematic view of a wall structure of a building envelope and the Figure further illustrates how indoor heating influences on temperature and relative humidity on a critical interface between structural layers of the envelope structure,
Figure 6 is a schematic diagram of some features relating to a control unit of the apparatus, and
Figure 7 is a schematic graph illustrating features relating to selectable control settings of the disclosed apparatus.

For the sake of clarity, the figures show some embodiments of the disclosed solution in a simplified manner. In the figures, like reference numerals identify like elements.

### Detailed description of some embodiments

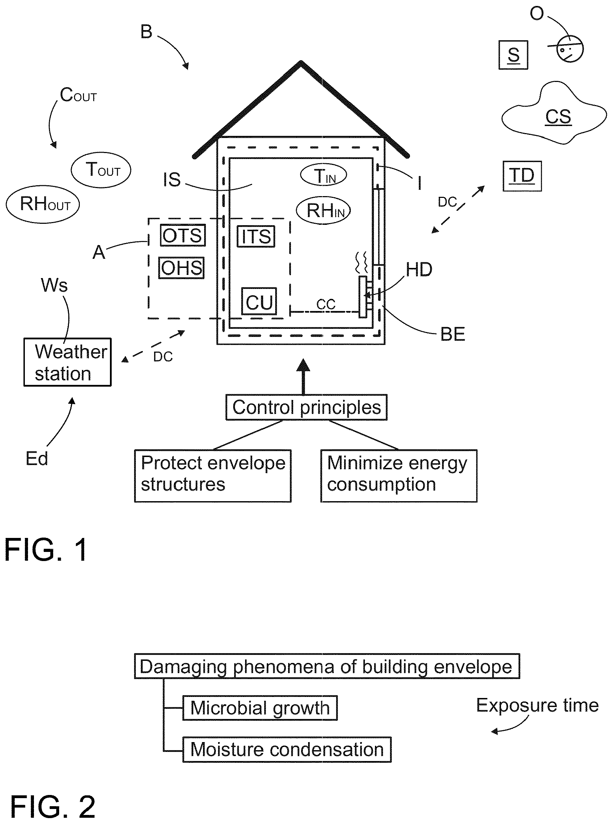

Figure 1 discloses a building B provided with an inner space IS limited by a building envelope BE which may be at least partly insulated I. The inner space IS is heated by means of one or more heating devices HD in order to increase indoor temperature T_{IN}. The heating device HD may be an electrically operable device, or it may alternatively be any other kind of heating device. The heating device HD may be controlled by means of a control apparatus A. The apparatus A monitors outdoor conditions C_{OUT} and generates control commands CC for controlling the heating device HD. The apparatus A is provided with one or more outdoor temperature sensors OTS or corresponding measuring devices and one or more outdoor relative humidity sensors OHS or corresponding measuring devices for determining the outdoor conditions C_{OUT}. The outdoor conditions C_{OUT} are determined on the basis of received outdoor temperature T_{OUT} and relative humidity RH_{OUT}. The apparatus A may also comprise one or more indoor temperature sensors ITS or corresponding measuring devices for providing the apparatus A with feedback data for the executed temperature control. The sensors OTS, OHS and ITS may transmit the sensing data to the apparatus A through wired or wireless data communication paths. The apparatus A may be mounted to the building B, or alternatively, it may be located external to the building B. Further, the apparatus A may communicate with one or more external electrical devices via data communication connections. Thus, the apparatus A may communicate with one or more servers S, cloud services CS and portable electrical terminal devices TD, such as smart phones. Thus, the apparatus A may implement external computation and data storage features, and further, control parameters and instructions may be adjusted by means of the external electrical devices. The apparatus A may also provide an operator O with information on status, sensing data, mould growth risk, energy consumption and other issues. The building B is an incompletely heated piece of real estate, which means that the indoor temperature T_{IN} is allowed to decrease below typical indoor temperatures during the wintertime and cold seasons. The apparatus A is provided with one or more control units CU for generating the control commands. The control unit CU is configured to execute a computer program product in a processor. The program comprises an algorithm for controlling the heating so that set control principles are achieved. In this solution the control aims to protect structures of the building envelope BE not to be damaged due to too high level of relative humidity. However, at the same time, the control system aims to minimize energy consumption of the heating.

When adverse outer conditions C_{OUT} trigger the indoor heating, temperature inside the envelope BE will rise with a delay. Increased temperature inside the envelope decreases level of relative humidity inside the envelope and may thereby mitigate microbial growth and condensation (see also Fig. 5) .

Figure 1 further discloses an alternative solution for gathering data on outdoor circumstances. The apparatus may receive outdoor sensing data on outdoor temperature T_{OUT} and outdoor relative humidity RH_{OUT} from and external device Ed via a data communication connection DC. The external device Ed may be a weather station Ws or server, for example. In some countries and area weather data is well available and it is often free of charge. In this embodiment the apparatus may be without any own outdoor sensors, or alternatively, it may comprise sensing devices and may use the data gathered by these sensors for example as a backup or to compare the externally provided data with the data generated at the apparatus.

Figure 2 discloses two adverse phenomenon which may cause serious problems to the structures of the building envelope. Microbial growth and moisture condensation inside the envelope may damage materials of the envelope when exposure time is long enough. Short term exposures are not necessarily hazardous for the structures. Conditions inside the envelope structure may visit conditions favourable for microbial growth for short durations since it takes time before the microbial growth begins. Further, slight wetting of the inner structure of the envelope can be allowed in structures being correctly designed. Thus, the disclosed apparatus takes into account time factor and determines an overall situation. When adverse conditions are detected these instances are registered. On the other hand, when safe conditions occur, they are also detected and registered. The need for heating may be determined on the basis of the detected adverse and safe conditions. The time factor and magnitude of the exposure are also considered because the structure and different material layers cause delays and influence to rate of change inside the structure in relation to the sensed outdoor conditions.

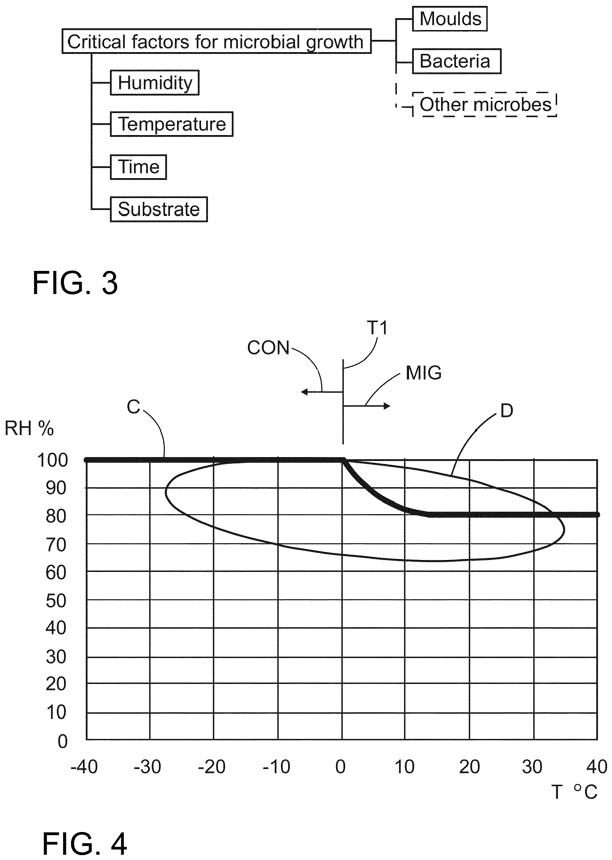

Figure 3 discloses that moulds and bacteria are possible microbes which may growth inside the structures of building envelope if suitable relative humidity and temperature conditions occur for sufficient time of exposure. The microbial growth requires also suitable substrate. Microbial growth occurs on the surface of almost all building materials after a sufficiently long period. Glass and metals are main exceptions. Finnish Mould Growth Model, on which this apparatus is based, takes into account also different mould proof properties of materials because structural materials are divided in four different mould growth sensitivity classes in this model.

Figure 4 discloses outdoor relative humidity values RH in function of outdoor temperature T. There is a curve C in Figure 4 indicating critical outdoor relative humidity values RH_{CriticalOut} which values are defined in scientific studies and experiments and are known by microbial growth models. As can be seen, there is a temperature value T1 above which microbial growth MIG exists and below which there may occur moisture condensation CON. The area D describes the temperature and relative humidity values occurring inside the envelope structure during the year. As shown in the figure, some of these relative humidity values are equal to or greater than the critical relative humidity values, creating conditions favourable for microbial growth and moisture condensation. Therefore, the disclosed apparatus is configured to heat the indoor space of the building in such a way that the relative humidity values do not remain in this critical area for too long so that no moisture damage occurs in the envelope structure.

It should be noted that different microbial growth models and mould growth models may have different shape of the curves C. Furthermore, the temperature value T1 may be below zero, since some microbes may be active even between 0 and -5 °C, for example. Moisture condensation on surfaces may occur also above the set temperature T1, but in temperatures above the T1 the microbial growth protection is decisive and lower critical RH values are implemented then. Size and shape of the area D may be defined in the implemented microbial growth model.

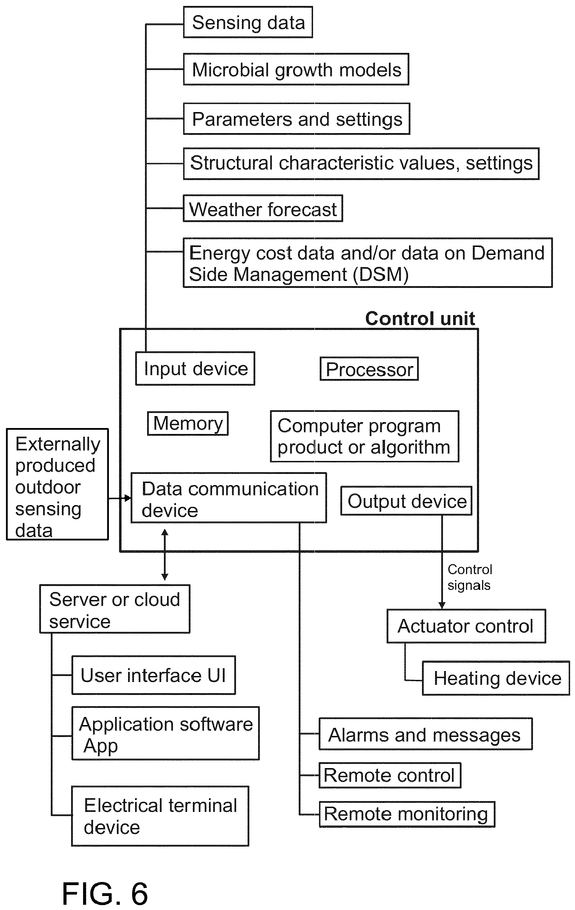

In Figure 6 it is also disclosed an alternative solution for providing the outdoor sensing data for the control unit. Data on outdoor circumstances can be produced externally and can then be transmitted to the apparatus.

Figure 5 discloses an example of a wall structure of a building envelope BE. The envelope BE may comprise a first structural layer L1 facing towards indoor space IS and an outermost structural layer L6 forming outer cladding of the envelope BE. There may be several structural layers L2 - L5 between the outermost layers L1 and L6.

Layers L1 - L6 of the structure s shown in Figure 5 are as follows:
- L1: Interior board and finishing
- L2: Air/vapour barrier
- L3: Thermal insulation
- L4: Sheathing
- L5: Ventilation gap
- L6: Cladding

Typically, the most critical interface for moisture damage is between thermal insulation (layer L3) and sheathing (layer L4) because the thermal insulation layer lowers the temperature at this point, causing the relative humidity to rise.

Figure 5 comprises temperature curves E which show that temperature on a critical surface CS can be increased by means of indoor heating whereby relative humidity on the critical surface CS can be decreased, as it is indicated by means of relative humidity curves F.

Figure 5 further discloses curves G indicating that yearly maximum value of Mould index M may be decreased below a critical value 1 by means of the above mentioned indoor heating. The mentioned Mould index M can have values between 0 and 6, and mould growth begins when the Mould index M reaches or exceeds value 1. The Mould index M and its limit values are based on the Finnish Mould Growth Model.

Figure 6 shows basic components of the control system of the disclosed apparatus. By means of an input device parameters, models, data and settings may be input for a control unit comprising a processor for executing a software program or algorithm. The control unit may communicate with different external apparatuses in a versatile manner by means of a data communication device. The control unit generates control signals and controls operation of one or more heating devices. The control unit may also produce additional signals such as alarms and messages and may also receive and produce needed remote control data.

The features of Figure 6 have been discussed already more detailed above in this document.

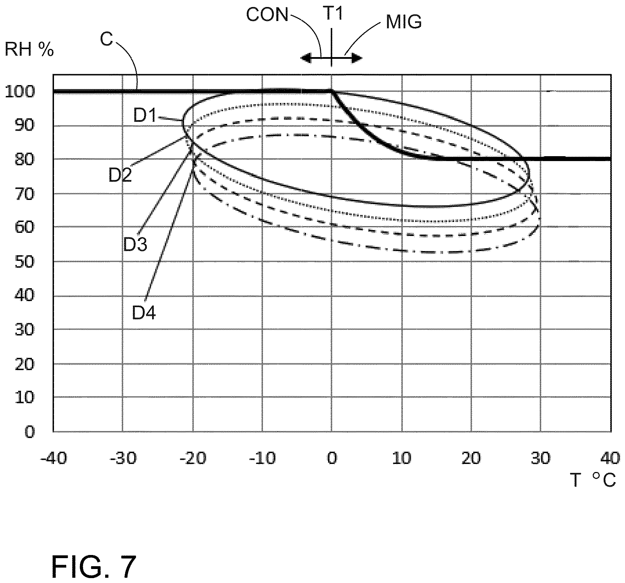

Figure 7 discloses outdoor relative humidity values RH in function of outdoor temperature T. A curve C is a summary curve indicating critical outdoor relative humidity values for moisture condensation and microbial growth. The curve C is based on the Finnish Mould Growth Model. An arrow MIG above temperature T1 indicates relative humidity values critical for microbial growth and an arrow CON below the temperature T1 indicates relative humidity values critical for moisture condensation. Signs D1 - D4 indicate selectable areas which describes the temperature and relative humidity values occurring inside the envelope structure during the year. As shown in the figure, some of these relative humidity values are equal to or greater than the critical relative humidity values, creating conditions favourable for microbial growth and moisture condensation. In this figure, area D1 depicts the temperature and relative humidity values that occur in an envelope structure in an unheated building. Area D2 depicts the values of temperature and relative humidity when there is low heating control level in use inside the building. Area D3 describes an area with a medium heating control level and area D4 an area with a high heating control level in use inside the building. Figure shows that the higher the indoor heating control level, the fewer relative humidity values that exceed the critical relative humidity value during the year.

In Figure 7 the heating is controlled so that no microbial growth and adverse moisture condensation occur inside the building structures. Inside the building structure conditions may be occasionally above critical RH-values of the moisture condensation and microbial growth. However, the inner space is heated so that moisture is not condensated too much inside the structure (selected limit value is not exceeded) and no microbial growth exist inside the structure (yearly maximum value of a Mould index M calculated by the Finnish Mould Growth Model stays below value 1). Envelope structures that are more sensitive to moisture damage use a higher heating control level inside the building.

The operator of the building selects the right heating control level from the apparatus based on the type of envelope structures in the building. The heating control levels required by the different envelope structures are described in the apparatus manual.

The drawings and the related description are only intended to illustrate the idea of the invention. In its details, the invention may vary within the scope of the claims.

## Claims

**1.** An apparatus (A) for controlling conditions of a building, which building is an incompletely heated building (B) and comprising an indoor space (IS) limited by a building envelope (BE);
wherein the apparatus (A) comprises:
at least one indoor temperature sensor (ITS) for sensing indoor temperature (T_{IN}) in the indoor space (IS);
input data on outdoor temperature (T_{OUT}) outside the building envelope (BE);
input data on outdoor relative humidity (RH_{OUT}) outside the building envelope (BE);
at least one control unit (CU) provided with at least processor and a computer program executable in the processor;
the control unit (CU) is provided with input sensing data on outdoor temperature (T_{OUT}) and outdoor relative humidity (RH_{OUT}) outside the building envelope (BE) and
and wherein the control unit (CU) is configured to receive sensing data from the mentioned sensors (ITS, OTS, OHS) and is configured to generate control commands (CC) for at least one heating device (HD) for heating the building (B);
**characterized in that**
the apparatus (A) is configured to monitor outdoor conditions (C_{OUT}) in response to the received outdoor temperature (T_{OUT}) and relative humidity (RH_{OUT}) and is configured to detect outdoor instants favourable for microbial growth;
the apparatus (A) is configured to generate heating control commands (CC) for heating the building (B) in response to the detected outdoor conditions (C_{OUT}) for preventing microbial growth inside structures of the building envelope (BE);
the apparatus (A) is provided with a measuring cycle for executing series of measurements of the outdoor temperature (T_{OUT}) and relative humidity (RH_{OUT});
the control unit (CU) is configured to accumulate the received outdoor sensing data for a determined period whereby the control unit (CU) is configured to generate accumulated data on the outdoor conditions (C_{OUT}); and
the control unit (CU) is configured to take into account the accumulated data of the outdoor conditions (C_{OUT}) when controlling the indoor heating.

**2.** The apparatus as claimed in claim 1, **characterized in that**
the produced outdoor sensing data is input to the control unit (CU) and shorten the time period for the considered accumulated data of the outdoor conditions (C_{OUT}) when the outdoor conditions change rapidly.

**3.** The apparatus as claimed in claim 1 or 2, **characterized in that**
the apparatus (A) is provided with input data on critical outdoor relative humidity values (RH_{CriticalOut}) defined for conditions being favourable for microbial growth at different outdoor temperatures (T_{OUT}); and
the apparatus (A) is configured to detect instants when the sensed outdoor relative humidity values (RH_{OUT}) exceed the critical outdoor relative humidity values (RH_{Criti-calOut}) at a certain outdoor temperature (T_{OUT}) and is configured to control the heating of the indoor space in (IS) response to the detected instants.

**4.** The apparatus as claimed in any one of the preceding claims 1 - 3, **characterized in that**
the apparatus (A) is configured to take into account in the heating control structural features of the building envelope (BE).

**5.** The apparatus as claimed in any one of the preceding claims 1 - 4, **characterized in that**
the control unit (CU) is configured to control the heating device (HD) to heat the indoor space (IS) only when the outdoor temperature is over 0°C or close to it since almost no microbial growth exists when the temperature is below 0°C.

**6.** The apparatus as claimed in any one of the preceding claims 1 - 4, **characterized in that**
the apparatus (A) is configured to detect conditions when the outdoor temperature (T_{OUT}) is below 0°C and outdoor relative humidity (RH_{OUT}) is 90 - 100% RH;
and wherein the apparatus (A) is configured to control the heating in order to mitigate moisture condensation inside structure of the envelope (BE).

**7.** The apparatus as claimed in any one of the preceding claims 1 - 6, **characterized in that** the apparatus further comprises:
at least one outdoor temperature sensor (OTS) for sensing outdoor temperature (T_{OUT}) outside the building envelope (BE); and
at least one outdoor humidity sensor (OHS) for sensing outdoor relative humidity (RH_{OUT}) outside the building envelope (BE).

**8.** The apparatus as claimed in any one of the preceding claims 1 - 7 **characterized in that**
the apparatus is configured to receive the outdoor sensing data on outdoor temperature (T_{OUT}) and outdoor relative humidity (RH_{OUT}) from and external device (Ed) via a data communication connection (DC).

**8.** A method for controlling conditions in a building, more specifically of preventing microbial growth in a building (B),
wherein the method comprises:
sensing indoor and outdoor temperatures (T_{OUT}, T_{IN});
sensing outdoor relative humidity (RH_{OUT}) outside the building envelope (BE);
transmitting sensing data to at least one control unit (CU); and
controlling by means of the control unit (CU) at least one heating device (HD) for heating the building (B) in response to the received sensing data;
**characterized by**
monitoring outdoor conditions (C_{OUT}) in response to the received outdoor temperature (T_{OUT}) and relative humidity and detecting outdoor instants favourable for microbial growth;
controlling the heating of the building (B) in response to the detected outdoor conditions (C_{OUT}) for preventing microbial growth inside a structure of the envelope (BE) of the building (B);
determining duration of the detected outdoor instants favourable for microbial growth and accumulating data on adverse outdoor conditions; and
controlling the heating in response to the accumulated data.

**9.** The method as claimed in claim 8, **characterized by**
determining outdoor instants favourable for microbial growth and accumulating data on adverse outdoor conditions;
determining outdoor instants unfavourable for microbial growth and accumulating data on safe outdoor conditions;
compensating the determined favourable instants with the determined unfavourable instants and providing the heating control with an accumulated data; and
controlling the heating in response to the accumulated data.

**10.** The method as claimed in claim 8 or 9, **characterized by**
providing the control unit with data on critical outdoor relative humidity values (RH_{CriticalOut}) based on a scientific microbial growth model; and
determining present state of the outdoor conditions (C_{OUT}) in response to the sensing data and the input critical outdoor relative humidity values (RH_{CriticalOut}) as a function of outdoor temperature (T_{OUT}) and detecting whether the outdoor conditions (C_{OUT}) are favourable or unfavourable for the microbial growth in relation to the microbial growth model.

**11.** The method as claimed in any one of the preceding claims 8 - 10, **characterized by**
filtering the generated sensing data by calculating floating average values for them and inputting the floating average values to the control unit (CU).

**12.** The method as claimed in any one of the preceding claims 8 - 11, **characterized by**
monitoring rate of change in outdoor conditions (C_{OUT}); and
automatically adjust frequency of rate for inputting the sensing data to the control unit (CU) in response to the detected rate of change.

**13.** The method as claimed in any one of the preceding claims 8 - 12, **characterized by**
providing the control unit (CU) with several selectable control settings for controlling magnitude of the heating;
determining structural features of the building envelope (BE); and
selecting the control setting in accordance with the determined structural features of the building envelope (BE) .

**14.** A computer program product, for controlling conditions in a building, more specifically of preventing microbial growth in a building (B),
where the computer program product comprises program code means configured to execute the following steps when being run on a computer or a data processing device:
receiving sensed indoor and outdoor temperatures (T_{OUT}, T_{IN});
receiving sensed outdoor relative humidity (RH_{OUT}) outside the building envelope (BE);
controlling at least one heating device (HD) for heating the building (B) in response to the received sensing data;
**characterized in**
monitoring outdoor conditions (C_{OUT}) in response to the received outdoor temperature (T_{OUT}) and relative humidity and detecting outdoor instants favourable for microbial growth;
controlling the heating of the building (B) in response to the detected outdoor conditions (C_{OUT}) for preventing microbial growth inside a structure of the envelope (BE) of the building (B);
determining duration of the detected outdoor instants favourable for microbial growth and accumulating data on adverse outdoor conditions; and
controlling the heating in response to the accumulated data.
